# EUROPÄISCHE PATENTANMELDUNG

(11) **EP 0 615 014 A1**
(43) Veröffentlichungstag der Anmeldung: **14.09.1994**
(21) Anmeldenummer: 94102990.2
(22) Anmeldetag: 28.02.1994
(51) Int. Cl.: D04H 1/00, D04H 1/60, B29C 43/00, B29K 67/00, B29K 105/12, B29K 105/26, B29L 31/10

(54) **Verfahren zum Herstellen von Formteilen auf einer Basis aus fasrigem Material und Kleber sowie nach diesem Verfahren hergestelltes Formteil**

(30) Priorität: 06.03.1993 DE 4307056
(71) Anmelder: HOECHST AKTIENGESELLSCHAFT, D-65926 Frankfurt am Main (DE)
(72) Erfinder: Knobloch, Peter, D-86845 Grossaitingen (DE)

(57) **Zusammenfassung**

Beschrieben wird ein Verfahren zum Herstellen eines Formteils, bei dem ein faseriges Material auf der Basis von Synthesefasern mit einem Kleber vermischt und unter Druck bis zum Abbinden des Klebers in einer Form gehalten wird. Als faseriges Material wird ausschließlich ein feinfaseriges Material mit Fasern eines Titers von 1 bis 10 dtex und als Kleber ein Einkomponentenkleber eingesetzt. Die Menge des Klebers wird so gewählt, daß sein Anteil im fertigen Formteil weniger als 10%, vorzugsweise 3 bis 5%, beträgt. Wegen seines einfachen Aufbaues aus nur einer Faserkomponente und seines geringen Kleberanteils eignet sich das Formteil zur erneuten Recyclebarkeit. Bevorzugtes Anwendungsgebiet ist der Einsatz als schall- und wärmedämmendes Material im Innenausbau.

## Beschreibung

Die vorliegende Erfindung betrifft ein Verfahren zum Herstellen eines Formteils, bei dem ein faseriges Material auf der Basis von Synthesefasern mit einem Kleber vermischt und unter Druck bis zum Abbinden des Klebers in einer Form gehalten wird, sowie ein nach diesem Verfahren hergestelltes Formteil und seine Anwendung. Ein derartiges Verfahren ist aus der EP-B-0 160 270 bekannt, in der auch verschiedene Möglichkeiten zum Aufbau derartiger Formteile beschrieben werden. Als faseriges Material werden dort Reißwolle, Holzspäne und gerissene Papierabfälle wie auch Abfälle aus der Verarbeitung von Kunstfasern, insbesondere Fasern aus Polyethylenterephthalat genannt. Im Beispiel dieser Patentschrift wird auch Reißwolle aus Polyester Spunbond-Abfällen, also ein zerrissenes Spinnvlies, erwähnt. Als Kleber wird ein pulverförmiges Gemisch aus einem Schmelzkleber auf der Basis eines Copolymerisats aus Vinylester und mindestens einem weiteren Vinylmonomeren, einem festen Epoxydharz und einem Härter für das Epoxydharz eingesetzt. Für die Zusammensetzung des Formteils werden in dieser Patentschrift 80 bis 95 Gewichtsteile faseriges Material und 5 bis 20 Gewichtsteile Kleber, insbesondere das Verhältnis 90:10 genannt.

Die Formteile gemäß dieser Patentschrift sind wegen der Zusammensetzung und des relativ hohen Anteils des Zweikom-ponentenklebers vergleichsweise umweltbelastend und nur sehr eingeschränkt recyclebar.

In der nicht vorveröffentlichten deutschen Patentanmeldung P 42 16 29.0 ist ein Verfahren zum Herstellen eines Formteils der oben genannten Art beschrieben, bei dem als faseriges Material ein Gemisch aus einem im wesentlichen feinfaserigem Material auf der Basis von Synthesefasern und aus kurzgeschnittenen Monofilamenten eingesetzt wird. Der Anteil des Klebers im fertigen Formteil beträgt weniger als 10 Gew.-%, insbesondere 2 bis 10 Gew.-% und vorzugsweise 3 bis 5 Gew.-%. Als Kleber wird ein Schmelzkleber auf der Basis eines Copolymerisats aus Vinylester und mindestens einem weiteren Vinylmonomeren genannt. Bei dem feinfaserigen Material handelt es sich um Fasern, die einen Titer zwischen 1 und 10 dtex, insbesondere zwischen 2 und 5 dtex, aufweisen.

Die kurzgeschnittenen Monofilamente, deren Anteil im fertigen Formteil 10 bis 90 Gew.-% betragen kann, verleihen dem Formteil die notwendige Härte und Steifigkeit, während das feinfaserige Material und der Kleber im wesentlichen die elastischen Eigenschaften des Formteils bestimmen. Diese Formteile können - nach den Ausführungen in dieser Patentanmeldung - als stabilisierende Platten im Bereich der Verpackung beim Aufbau von Packstücken, als schall- und wärmedämmendes Material, beispielsweise im Innenbau, als Isolationsmaterial und Antidröhnmaterial im Fahrzeugbau eingesetzt werden.

Der vorliegenden Erfindung liegt die Aufgabe zugrunde, ein Verfahren der eingangs angegebenen Art so weiterzubilden, daß das Formteil einerseits ausgezeichnete Schall- und wärmedämmende Eigenschaften und andererseits eine hohe Umweltverträglichkeit besitzt.

Zur Lösung dieser Aufgabe ist ein Verfahren der eingangs angegebenen Art erfindungsgemäß dadurch gekennzeichnet, daß als faseriges Material ausschließlich ein feinfaseriges Material mit Fasern eines Titers von 1 bis 10 dtex und als Kleber ein Einkomponentenkleber eingesetzt werden, wobei die Menge des Klebers so gewählt wird, daß sein Anteil im fertigen Formteil weniger als 10 Gew.-% beträgt.

Das feinfaserige Material mit Fasern eines Titers zwischen 1 und 10 dtex, insbesondere zwischen 2 und 5 dtex, verleiht dem Formteil eine hohe Elastizität und insbesondere ausgezeichnete schall- und wärmedämmende Eigenschaften. Dennoch ist eine für viele Anwendungszwecke ausreichende mechanische Belastbarkeit gegeben. Die Verwendung des Einkomponentenklebers und insbesondere sein relativ geringer Anteil von weniger als 10 Gew.-%, vorzugsweise 3 bis 5 Gew.-%, sorgen für eine gute Umweltverträglichkeit des Formteils. Nicht nur ist das Formteil recyclebar, sondern es ist auch sichergestellt, daß im Fall des erneuten Recyclens der Kleber sich nur langsam anreichert. Ebenso vorteilhaft auf die Recyclebarkeit wirkt sich das "Einkomponentensystem" des faserigen Materials aus, da im Gegensatz zu der oben erwähnten deutschen Patentanmeldung das Formteil keinen monofilen Anteil besitzt. Als faseriges Material werden bevorzugt Reißwolle auf der Basis von Synthesefasern und/oder ein zerkleinertes Vlies, insbesondere ein zerkleinertes Spinnvlies, auf der Basis von Polyestern eingesetzt. Das faserige Material kann aus dem Herstellungsprozeß, aus den Prozessen der Weiterverarbeitung und auch aus Resten bzw. Produkten nach Gebrauch stammen. Der zerkleinerte Spinnvliesstoff kann sowohl durch Nadelung wie auch durch Binder, gegebenenfalls auch thermisch, verfestigt werden.

Als Kleber wird vorzugsweise ein Schmelzkleber, beispiels-weise auf der Basis eines Copolymerisats aus Vinylester und gegebenenfalls einem weiteren Vinylmonomeren, eingesetzt. Die Art des Klebers kann in weiten Bereichen variiert werden. Neben flüssigen Klebern sind insbesondere pulverförmige Kleber geeignet. Auch reaktive Kleber können zum Einsatz gelangen. Neben Klebern auf Epoxyd- und/oder Polyurethanbasis kommen auch Thermoplaste in Frage, die durch Erhitzen verflüssigt werden und beim Abkühlen das feinfaserige Material binden.

Zur Herstellung des Formteils werden das faserige Material und der Kleber innig gemischt, in einer heizbaren Presse entsprechend dem späteren flächenbezogenen Gewicht gleichmäßig verteilt und unter Druck auf eine vorgegebene Temperatur erhitzt. Die Temperatur richtet sich nach der Arbeitstemperatur des Klebers. Die Dauer des Preßvorgangs ist so zu wählen, daS der Kleber im Inneren des Formteils vollständig reagieren kann. Der Preßdruck und der Abstand der Druckplatten der Presse richten sich nach der gewünschten Dichte und Dicke des herzustellenden Formteils. Der auf das Formteil ausgeübte Preßdruck wird aufgehoben, wenn der Kleber seine volle Klebewirkung ausübt. Dies ist z.B. nach Unterschreiten einer bestimmten Temperatur der Fall.

In weiterer Ausgestaltung der Erfindung ist vorgesehen, daß dem faserigen Material zusätzlich zu dem Kleber eine wasserabstoßende Komponente beigemischt wird, um einem Eindringen von Wasser in das Formteil infolge von Kapillarwirkung entgegenzuwirken. Hierzu sind marktgebräuchliche Zusatzstoffe geeignet, die unter dem Gesichtspunkt auszuwählen sind, daß sie der bei der Herstellung des Formteils maximal auftretenden Temperatur widerstehen und mit den verwendeten Materialien mischbar sind.

Dem Formteil kann eine besondere Stabilität zusätzlich dadurch verliehen werden, daß auf einer oder beiden Außenseiten Deckschichten, beispielsweise in Form von textilen Flächengebilden auf der Basis von Vliesstoffen, Geweben, Gewirken, Gestricken oder Gelegen, aufgebracht werden.

Ein bevorzugtes Anwendungsgebiet für das erfindungsgemäß hergestellte Formteil ist der Innenausbau. Besonders vorteilhaft läßt es sich wegen seiner guten schall- und wärmedämmenden Eigenschaften als Trittschalldämmung unter üblichen Bodenbelägen wie Teppichböden, Holzböden, Fliesen einsetzen. Die mechanische Belastbarkeit des erfindungsgemäß ausgebildeten Formteils ist für diese Zwecke ausreichend hoch, vorausgesetzt, das Formteil liegt vollflächig auf einem harten Untergrund auf. Darüber hinaus kann das erfindungsgemäße Formteil auch als Schall- und Wärmedämmung in Gebäudedecken und -wänden eingesetzt werden. Ferner ist es als Isolations- und Antidröhnmaterial im Fahrzeugbau wie auch als stabilisierende Platte beim Aufbau von Packstücken in der Verpackungsindustrie verwendbar.

## Patentansprüche

1. Verfahren zum Herstellen eines Formteils, bei dem ein faseriges Material auf der Basis von Synthesefasern mit einem Kleber vermischt und das Gemisch unter Druck bis zum Abbinden des Klebers in einer Form gehalten wird, dadurch gekennzeichnet, daß als faseriges Material ausschließlich ein feinfaseriges Material mit Fasern eines Titers von 1 bis 10 dtex und als Kleber ein Einkomponentenkleber eingesetzt werden, wobei die Menge des Klebers so gewählt wird, daß sein Anteil im fertigen Formteil weniger als 10%-Gew. beträgt.

2. Verfahren nach Anspruch 1, dadurch gekennzeichnet, daß die Fasern des faserigen Materials einen Titer zwischen 2 und 5 dtex aufweisen.

3. Verfahren nach Anspruch 1 oder 2, dadurch gekennzeichnet, daß das faserige Material aus Polyestern, insbesondere aus Polyethylenterephthalat, besteht.

4. Verfahren nach einem de vorhergehenden Ansprüche, dadurch gekennzeichnet, daß das faserige Material eine Reißwolle auf der Basis von Synthesefasern und/oder ein zerkleinertes Vlies, insbesondere ein zerkleinertes Spinnvlies, ist.

5. Verfahren nach einem der vorhergehenden Ansprüche, dadurch gekennzeichnet, daß der Anteil des Klebers im fertigen Formteil 2 bis 10 Gew.-% beträgt.

6. Verfahren nach Anspruch 5, dadurch gekennzeichnet, daß der Anteil des Klebers im fertigen Formteil 3 bis 5 Gew.-% beträgt.

7. Verfahren nach einem der vorhergehenden Ansprüche, dadurch gekennzeichnet, daß als Kleber ein pulverförmiger Schmelzkleber verwendet und das Gemisch aus faserigem Material und Kleber in der Form unter Druck auf eine solche Temperatur erwärmt wird, daß der Schmelzkleber flüssig wird und unter Abbinden des Schmelzklebers ein fester Formkörper entsteht.

8. Verfahren nach einem der vorhergehenden Ansprüche, dadurch gekennzeichnet, daß als Kleber ein Schmelzkleber auf der Basis eines Copolymerisats aus Vinylester und mindestens einem weiteren Vinylmonomeren eingesetzt wird.

9. Verfahren nach einem der vorhergehenden Ansprüche, dadurch gekennzeichnet, daß das faserige Material mit dem Kleber und zusätzlich mit einer wasserabstoßenden Komponente und/oder einer weiteren Komponente vermischt wird, die zusätzliche Eigenschaften wie eine günstige Beeinflussung des Brandverhaltens verleiht.

10. Formteil aus einem verpreßten Gemisch eines faserigen Materials auf der Basis von Synthesefasern und eines abgebundenen Klebers, dadurch gekennzeichnet, daß das faserige Material ausschließlich aus Fasern eines Titers von 1 bis 10 dtex besteht, der Kleber ein Einkomponentenkleber ist und der Anteil des Klebers weniger als 10 Gew.-% beträgt.

11. Anwendung des Formteils nach Anspruch 10 als schall- und wärmedämmendes Material im Innenausbau.
